# EUROPEAN PATENT SPECIFICATION

(11) **EP 3 364 065 B1**
(45) Date of publication and mention of the grant of the patent: **29.01.2020**
(21) Application number: 18156138.2
(22) Date of filing: 09.02.2018
(51) Int. Cl.: F16F 1/38

(54) **TORQUE ROD, AND METHOD FOR MANUFACTURING TORQUE ROD**
DREHMOMENTSTANGE UND VERFAHREN ZUR HERSTELLUNG DER DREHMOMENTSTANGE
BARRE DE TORSION ET PROCÉDÉ DE FABRICATION DE BARRE DE TORSION

(30) Priority: 16.02.2017 JP 2017026738
(43) Date of publication of application: 22.08.2018
(73) Proprietor: Toyo Tire Corporation, Itami-shi, Hyogo 664-0847 (JP)
(72) Inventor: HATANO, Masato, Itami-shi, Hyogo 664-0847 (JP)
(74) Representative: Prüfer & Partner mbB Patentanwälte · Rechtsanwälte

(56) References cited:
- JP-A- 2011 190 884
- JP-A- 2012 042 041
- JP-A- 2012 092 909
- JP-A- 2012 202 460
- JP-A- 2014 142 009
- US-A1- 2011 233 834
- US-A1- 2012 112 395

## Description

### [Technical Field]

The present invention relates to a torque rod connecting two antivibration devices, and also relates to a method for manufacturing the torque rod.

### [Background Art]

A conventional torque rod is known, in which an antivibration base body including a rubber-like elastic body connects an internal peripheral face of a cylindrical outside member and an external peripheral face of an axial inside member, to thereby form a first antivibration device. In the respective radial directions, the first antivibration device and a second antivibration device are connected by a connecting member. For reducing the number of component parts, the torque rod has such a configuration that the connecting member is integrated with the outside member of the first antivibration device (Patent Literature 1). Patent Literature 2 discloses a vibration proof device and a method for manufacturing the same. The device comprises a cylindrical outside member having an axial contact face and a cylindrical inside member disposed on an internal peripheral side of the outside member, and an anti-vibration base body including a rubber-like elastic body adhered to the inside member and to the outside member. The device further comprises a connecting member connecting a second anti-vibration device to the outside member. The outside member includes a level difference provided at the contact face and having a radial outside axially concaved relative to a radial inside. For manufacturing the device, the inside and outside members are fixed between contact faces of a mold and the elastic body and rubber is injected into a cavity of the mold to which the inside member and the outside member are fixed.

### [Citation List]

### [Patent Literature]

[Patent Literature 1] JP-A No. 2013-210074
[Patent Literature 2] JP-A-2012 092909

### [Summary of Invention]

### [Technical Problem]

According to the above conventional technology, however, a heat at the time of a vulcanized molding of the antivibration base body of the first antivibration device expands the rubber-like elastic body, to thereby apply radially outward a pressure to the outside member of the first antivibration device. This leads to a concern that a part of the outside member may be deformed or the outside member may be broken attributable to the deformation. In particular, the configuration is such that the outside member of the first antivibration device is integrated with the connecting member. Thus, the outside member features a rigidity which is different depending on the position in the circumferential direction. The difference of rigidity leads to a problem that a part of the outside member may be easily deformable or breakable.

For addressing the above problem, the present invention has been made. It is, therefore, an object of the present invention to provide a torque rod capable of suppressing an outside member from being deformed or broken at the time of a vulcanized molding, and also to provide a method for manufacturing the torque rod.

### [Solution to Problem]

In order to achieve the object, according to an aspect of the invention, a torque rod of the present invention includes: a first antivibration device including: a cylindrical outside member having an axial end face, an axial inside member disposed on an internal peripheral side of the outside member, and an antivibration base body including a rubber-like elastic body adhered, in a vulcanized manner, to an external peripheral face of the inside member and to an internal peripheral face of the outside member; and a connecting member connected to a second antivibration device connecting two members by a rubber-like elastic body, the connecting member being an article integrated with the outside member, wherein the outside member includes a level difference which is provided at the axial end face around an entire circumference and which has a radial outside axially concaved relative to a radial inside, wherein the level difference is a groove portion axially concaved from the axial end face.

Further, in a method for manufacturing a torque rod, according to the aspect of the present invention, which includes: a first antivibration device connecting, by an antivibration base body including a rubber-like elastic body, an internal peripheral face of a cylindrical outside member with an external peripheral face of an axial inside member disposed on an internal peripheral side of the outside member, and a connecting member connected to a second antivibration device connecting two members by a rubber-like elastic body, the connecting member being an article integrated with the outside member, according to a further aspect of the invention, the method for manufacturing the torque rod includes: a holding process for: fixing the inside member in a metallic mold, and sandwiching axial end faces of the outside member respectively with contact faces of the metallic mold, to thereby fix the outside member in the metallic mold; and a vulcanizing process for making a vulcanized molding by injecting a rubber-like elastic body into a cavity of the metallic mold to which the inside member and the outside member are fixed in the holding process, to thereby form the antivibration base body connecting the external peripheral face of the inside member with the internal peripheral face of the outside member, wherein one of an axial end face of the axial end faces and a contact face of the contact faces has a protrusion which protrudes toward another of the axial end face and the contact face and which is formed around an entire circumference, and wherein the other of the axial end face and the contact face includes a groove portion in which the protrusion fits.

### [Advantageous Effects of Invention]

With the torque rod according to a first aspect, the connecting member connected to the second antivibration device is an article formed integral with the outside member of the first antivibration device. Thus, depending on the position in the circumferential direction, the outside member has a different rigidity. When the antivibration base body of the first antivibration device is molded in a vulcanized manner, a radial outward pressure is caused by a thermal expansion of the rubber-like elastic body. With the radial outward pressure applied to the outside member, the difference of rigidity deforms a part of the first outside member, leading to a concern that the outside member may be broken attributable to the deformation. However, the level difference having the radial outside axially concaved relative to the radial inside is provided at the axial end face of the outside member around an entire circumference. Due to this, at the time of the vulcanized molding, allowing a part of the metallic mold for setting the outside member to engage with the level difference around the entire circumference can suppress the radial outward deformation of the outside member. As a result thereof, the outside member can be suppressed from being deformed or broken at the time of the vulcanized molding.

With the torque rod according to a second aspect, the level difference is the groove portion axially concaved from the axial end face. Due to this, allowing, at the time of the vulcanized molding, a part of the metallic mold for setting the outside member to fit in the groove portion axially concaved around the entire circumference from the axial end face of the outside member can suppress the outside member from being deformed radially outward. As a result thereof, similarly to the effect according to the first aspect, the outside member can be suppressed from being deformed or broken at the time of the vulcanized molding.

With the torque rod according to a third aspect, the level difference is the protrusion axially protruding from the axial end face. Due to this, allowing, at the time of the vulcanized molding, the protrusion axially protruding around the entire circumference from the axial end face of the outside member to bite into the metallic mold for setting the outside member can suppress the outside member from being deformed radially outward. As a result thereof, similarly to the effect according to the first aspect, the outside member can be suppressed from being deformed or broken at the time of the vulcanized molding.

With the torque rod according to a fourth aspect, the outside member has a thin portion, and in terms of a radial dimension from the internal peripheral face, the thin portion is smaller than a region adjacent to the thin portion in a circumferential direction. Compared with a case in which the radial dimension of the outside member is even in the circumferential direction, the outside member can be reduced in weight.

Further, the rigidity of the thin portion is lower than the rigidity of the region adjacent to the thin portion in the circumferential direction. Thus, the difference of the rigidity leads to a concern that a part of the outside member may be deformed or broken. However, fitting a part of the metallic mold in the groove portion of the outside member or allowing the protrusion of the outside member to bite into a part of the metallic mold can suppress the outside member from being deformed or broken at the time of the vulcanized molding. As a results of these, in addition to the effects according to any one of the first to third aspects, the outside member, while being reduced in weight, can be suppressed from being deformed or broken at the time of the vulcanized molding.

With the torque rod according to a fifth aspect, the antivibration base body includes an elastic leg portion for radially connecting the inside member with the outside member. The elastic leg portion is adhered to the first thick portion of the outside member in a vulcanized manner. The radial dimension of the first thick portion is set larger than the radial dimension of the thin portion. At the time of the vulcanized molding, this can secure the rigidity of the first thick portion to which the load from the elastic leg portion is directly applied attributable to the thermal expansion of the elastic leg portion. As a result thereof, in addition to the effect according to the fourth aspect, the outside member can be further suppressed from being deformed or broken at the time of the vulcanized molding.

With the torque rod according to a sixth aspect, the antivibration base body includes a stopper portion provided, toward the inside member, at the internal peripheral face of the outside member. The stopper portion is adhered to the second thick portion of the outside member in a vulcanized manner. The radial dimension of the second thick portion is set larger than the radial dimension of the thin portion. At the time of the vulcanized molding, this can secure the rigidity of the second thick portion to which the load from the stopper portion is directly applied attributable to the thermal expansion of the stopper portion. As a result thereof, in addition to the effect according to the fourth or fifth aspect, the outside member can be further suppressed from being deformed or broken at the time of the vulcanized molding.

With the method for manufacturing the torque rod according to a seventh aspect, the holding process for sandwiching the axial end faces of the outside member with the contact faces of the metallic mold can allow the protrusion protruding from one of the axial end face and the contact face to bite into another of the axial end face and the contact face. The protrusion is formed around the entire circumference of the axial end face or of the contact face. Thus, the outside member can be suppressed from being deformed radially outward attributable to the thermal expansion of the rubber-like elastic body in the vulcanizing process. As a result thereof, the outside member can be suppressed from being deformed or broken at the time of the vulcanized molding.

With the method for manufacturing the torque rod according to an eighth aspect, the other of the axial end face and the contact face includes a groove portion in which the protrusion fits. Carrying out the vulcanizing process with the protrusion fitted in the groove portion can further suppress the outside member from being deformed radially outward in the vulcanizing process. As a result thereof, in addition to the effect according to the seventh aspect, the outside member can be more suppressed from being deformed or broken at the time of the vulcanized molding.

With the method for manufacturing the torque rod according to a ninth aspect, the protrusion is provided at the contact face of the metallic mold, and the metallic mold is set higher in rigidity than the outside member. Due to this, impressing, in the holding process, the protrusion of the contact face to the axial end face of the outside member can form the groove portion on the axial end face of the outside member. The groove portion is an impression by the protrusion. Since the groove portion is the impression by the protrusion, the protrusion and the groove portion completely coincide with each other in terms of position. This eliminates the need for positioning the protrusion with the groove portion. As a result of these, in addition to the effect according to the eighth aspect, the operational efficiency in the holding process can be improved.

With the method for manufacturing the torque rod according to a tenth aspect, the protrusion has a height set to be less than or equal to 0.3 mm. At the time of forming the groove portion as an impression by the protrusion, this allows the axial end face of the outside member to easily contact the contact face of the metallic mold. Thus, this can make it unlikely to fill, in the vulcanizing process, the rubber-like elastic body in between the axial end face and the contact face. In the vulcanizing process, the protrusion may come off from the groove portion when the axial end face is spaced apart from the contact face attributable to the thermal expansion of the rubber-like elastic body between the axial end face and the contact face. However, the above unlikely filling of the rubber-like elastic body can suppress the coming-off of the protrusion. As a result thereof, the protrusion works to easily suppress the outside member from being deformed radially outward in the vulcanizing process. Thus, in addition to the effect according to the ninth aspect, the outside member can be more suppressed from being deformed or broken at the time of the vulcanized molding.

With the method for manufacturing the torque rod according to an eleventh aspect, the protrusion has a height set to be more than or equal to 0.2 mm. This allows the protrusion, which is provided at one of the axial end face and the contact face, to sufficiently bite into the other of the axial end face and the contact face. As a result thereof, the protrusion works to easily suppress the outside member from being deformed radially outward in the vulcanizing process. Thus, in addition to the effects according to any one of the seventh to tenth aspects, the outside member can be more suppressed from being deformed or broken at the time of the vulcanized molding.

### [Brief Description of Drawings]

[FIG. 1] Fig. 1 is a plan view of a torque rod, according to a first embodiment of the present invention.
[FIG. 2] Fig. 2 is a cross sectional view of the torque rod, taken along the line II-II in Fig. 1.
[FIG. 3] Fig. 3 is a cross sectional view of the torque rod, taken along the line III-III in Fig. 1.
[FIG. 4] Fig. 4 is a drawing for describing about a state before closing of a metallic mold for manufacturing the torque rod.
[FIG. 5] Fig. 5 is a drawing for describing about a state after closing of the metallic mold for manufacturing the torque rod.
[FIG. 6] Fig. 6 is a drawing for describing about a state after closing of the metallic mold for manufacturing the torque rod, according to a second embodiment.

### [Description of Embodiments]

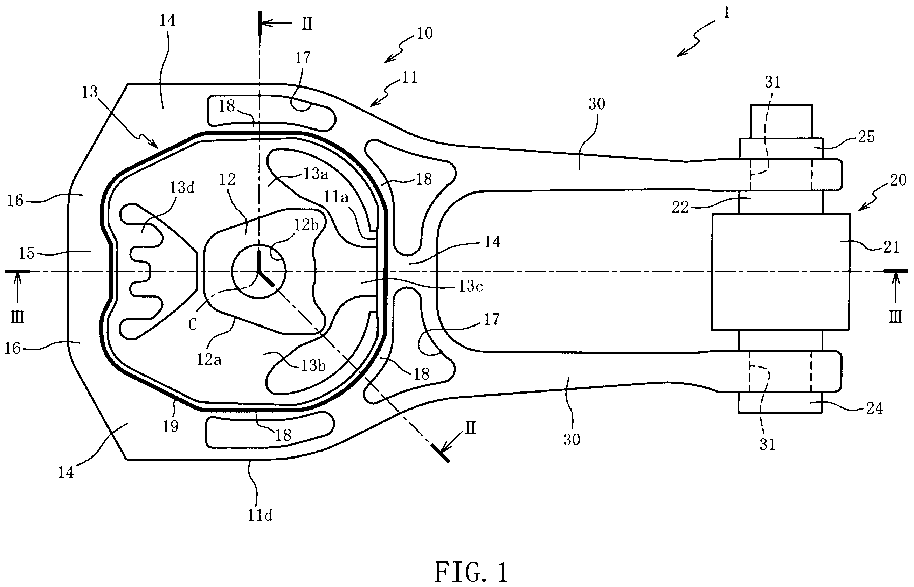

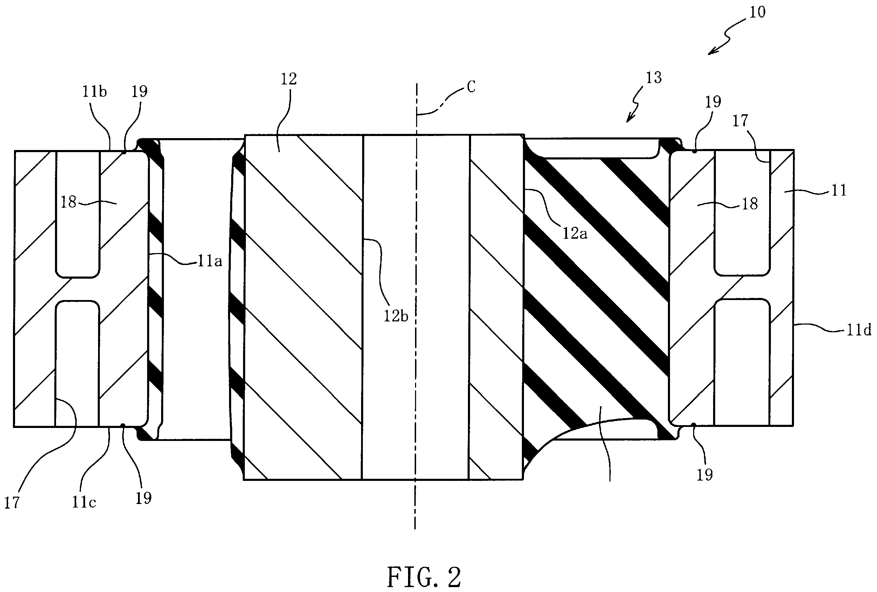

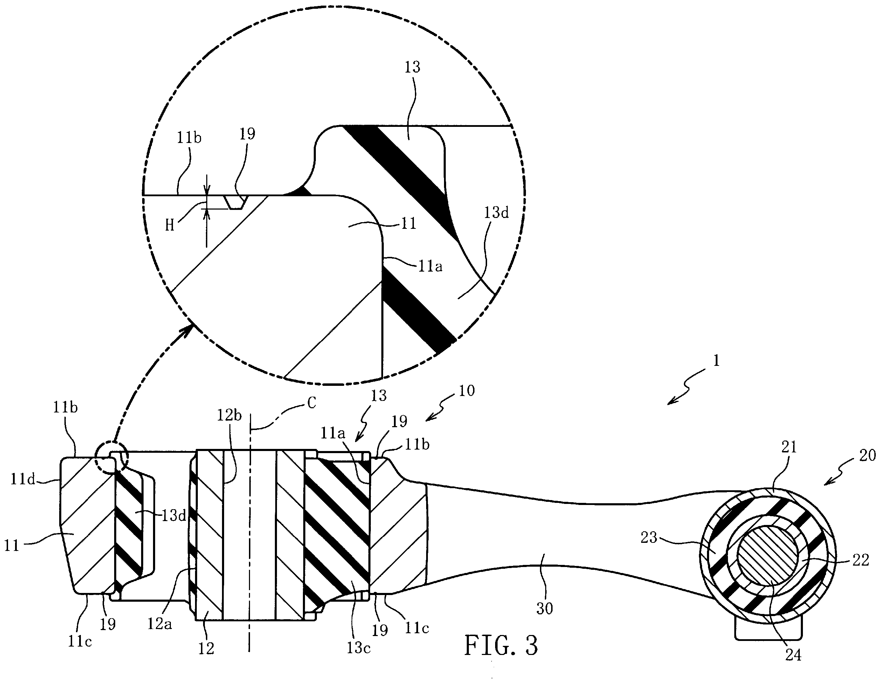

Hereinafter, a description will be made about preferred embodiments of the present invention, referring to attached drawings. First, referring to Fig. 1 to Fig. 3, a description will be made about a torque rod 1, according to a first embodiment of the present invention. Fig. 1 is a plan view of the torque rod 1. Fig. 2 is a cross sectional view of the torque rod 1, taken along the line II-II in Fig. 1. Fig. 3 is a cross sectional view of the torque rod 1, taken along the line III-III in Fig. 1.

As shown in Fig. 1, the torque rod 1 is an antivibration device. Receiving a torque from an engine, the torque rod 1 regulates a displacement of a direction of roll of the engine at the time of acceleration. The torque rod 1 includes a first bush 10, a second bush 20 and a connecting member 30. The first bush 10 is mounted to a vehicle body side (not shown). The second bush 20 is mounted to the engine side (not shown). The connecting member 30 connects the first bush 10 with the second bush 20. Further, the first bush 10 may be mounted on the engine side, while the second bush 20 may be mounted to the vehicle body side.

The first bush 10 incudes a cylindrical outside member 11, a cylindrical inside member 12, and an antivibration base body 13. The inside member 12 is disposed on an internal peripheral side of the outside member 11. The antivibration base body 13 includes a rubber-like elastic body. In a vulcanized manner, the antivibration base body 13 is adhered to an internal peripheral face 11a of the outside member 11 and to an external peripheral face 12a of the inside member 12. The outside member 11 and the inside member 12 each include an aluminum alloy.

The antivibration base body 13 includes three elastic leg portions 13a, 13b, 13c, and a stopper portion 13d. The elastic leg portions 13a, 13b, 13c connect the outside member 11 with the inside member 12. Toward the inside member 12, the stopper portion 13d is provided at the internal peripheral face 11a of the outside member 11. When viewed from an axial direction of the outside member 11 and of the inside member 12, the elastic leg portions 13a, 13b are disposed, relative to the inside member 12, toward a side opposite to the second bush 20 side and the connecting member 30 side. The elastic leg portions 13a, 13b are disposed in a form of an alphabetical V. Relative to the inside member 12, the elastic leg portion 13c is disposed on the second bush 20 side and on the connecting member 30 side.

The stopper portion 13d is a member for regulating an excessive displacement of the outside member 11 relative to the inside member 12. Relative to the inside member 12, the stopper portion 13d is disposed on a side opposite to the elastic leg portion 13c side. In this way, disposing the elastic leg portions 13a, 13b, 13c and the stopper portion 13d can bring about a desired antivibration performance.

When viewed in an axial direction, the inside member 12 is in a form of a substantial trapezoid. An internal peripheral face 12b is in a form of a circle around an axial center C. The inside member 12 has the external peripheral face with which the elastic leg portion 13c is connected. For securing a free length of the elastic leg portion 13c, the external peripheral face of the inside member 12 is formed toward the axial center C side in a concaved manner.

The outside member 11 includes a first thick portion 14, a second thick portion 15 and a first thin portion 16. The first thick portion 14 is connected with the elastic leg portions 13a, 13b. The stopper 13d is provided at the second thick portion 15. In a circumferential direction, the first thin portion 16 connects the first thick portion 14 with the second thick portion 15. The first thick portion 14 and the second thick portion 15 are each a region where a radial dimension is set larger than a region adjacent thereto in the circumferential direction. A load from the elastic leg portions 13a, 13b or from the stopper portion 13d is directly applied to the first thick portion 14 and the second thick portion 15. The above setting larger can enhance the rigidity and strength of the first thick portion 14 and the second thick portion 15.

In terms of radial dimension, the first thin portion 16 is set smaller than the region (the first thick portion 14 and the second thick portion 15) adjacent to the first thin portion 16 in the circumferential direction. A relatively small load is applied to the first thin portion 16. While lowering the rigidity and strength of the first thin portion 16 and securing the endurance of the outside member 11, the above setting smaller can reduce the weight of the outside member 11.

As shown in Fig. 1 and Fig. 2, a plurality of thinning grooves 17 are provided in substantially a half circumference on the connecting member 30 side of the outside member 11. From axial end faces 11b, 11c, the thinning grooves 17 are each concaved toward the center in the axial direction. Further, according to this embodiment, the thinning grooves 17 on both sides in the axial direction are free from being continuous. However, the thinning grooves 17 on both sides in the axial direction may be made continuous to thereby form a through hole.

The outside member 11 includes a second thin portion 18. The second thin portion 18 is a region on the internal peripheral side of the thinning groove 17. In terms of the radial dimension from the internal peripheral face 11a, the second thin portion 18 is set smaller than the region adjacent to the second thin portion 18 in the circumferential direction. The thinning groove 17 and the second thin portion 18 are provided in a region where a load applied from the inside member 12 via the antivibration base body 13 is relatively small. While securing the endurance of the outside member 11, this providing can reduce the outside member 11 in weight. Further, the region sandwiched by the second thin portions 18 in the circumferential direction is also the first thick portion 14.

As shown in Fig. 1 and Fig. 3, the outside member 11 includes a groove portion 19 (level difference). From each of the axial end faces 11b, 11c, the groove portions 19 is concaved in the axial direction. The groove portion 19 is continuous around the entire circumference. The groove portion 19 is provided along the internal peripheral face 11a of the outside member 11. The groove portion 19 has a cross section, which includes the axial center C, in a form of a trapezoid. In the radial direction, the groove portion 19 is disposed more inside (the second thin portion 18) than the thinning groove 17.

The second bush 20 incudes a cylindrical outside member 21, a cylindrical inside member 22, and an antivibration base body 23. The inside member 22 is disposed on an internal peripheral side of the outside member 21. The antivibration base body 23 includes a rubber-like elastic body. In a vulcanized manner, the antivibration base body 23 is adhered to an internal peripheral face of the outside member 21 and to an external peripheral face of the inside member 22. The outside member 21 and the inside member 22 each include an iron and steel material. Via a bracket (not shown), the outside member 21 is mounted to the engine side.

The connecting member 30 is an article formed in a manner to be integrated with the outside member 11. The connecting member 30 is a pair of members provided in a manner to extend radially from the external peripheral face of the outside member 11. The connecting member 30 connects the first bush 10 with the second bush 20 such that an axial center of the second bush 20 becomes vertical to the axial center C of the first bush 10.

A through hole 31 is provided on the tip end side (end portion side away from the outside member 11) of each of a pair of connecting members 30. In portions where the through holes 31 are provided, the opposing distance of the pair of connecting members 30 is set substantially the same as the axial dimension of the inside member 12. The inside member 22 is disposed between the pair of connecting members 30. In this state, inserting a bolt 24 into the through hole 31 and into an internal periphery of the inside member 22 for fastening with a nut 25 fixes the inside member 22 to the connecting member 30.

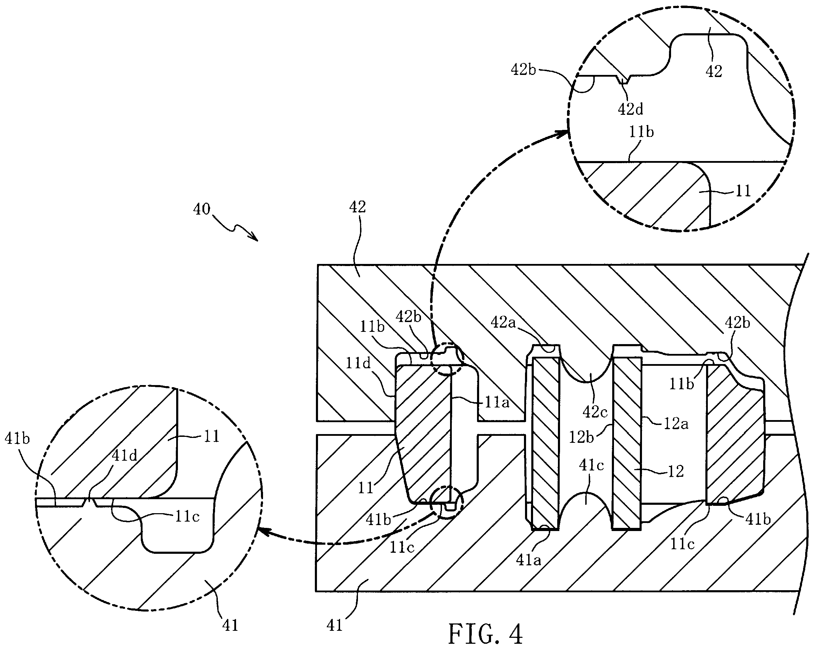

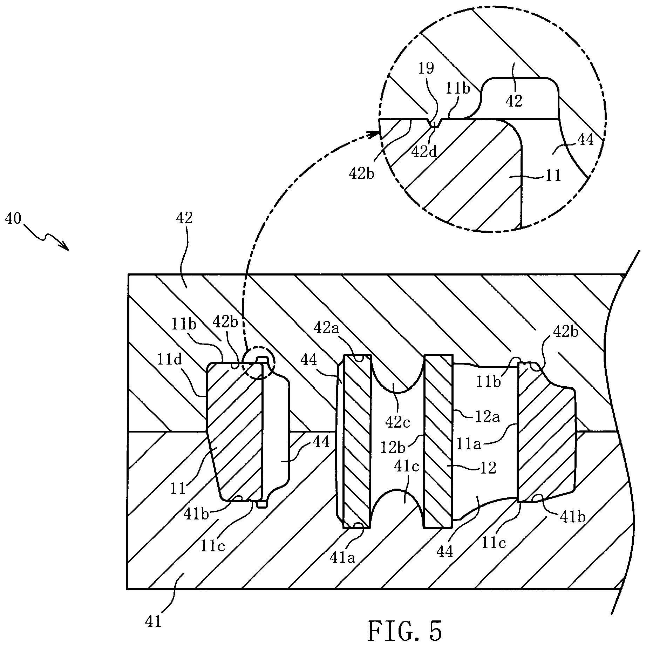

Then, referring to Fig. 4 and Fig. 5, a description will be made about a metallic mold 40 for manufacturing the torque rod 1 (the first bush 10). Fig. 4 is a drawing for describing about a state before closing of the metallic mold 40 for manufacturing the first bush 10. Fig. 5 is a drawing for describing about a state after closing of the metallic mold 40 for manufacturing the first bush 10.

As shown in Fig. 4, the metallic mold 40 includes a lower mold 41 and an upper mold 42. The upper mold 42 is so configured that moving the upper mold 42 upward and downward relative to the lower mold 41 can close and open the metallic mold 40. The lower mold 41 and the upper mold 42 each include an iron and steel material.

The upper face of the lower mold 41 includes a fitting concaved portion 41a and an annular contact face 41b. The inside member 12 fits in the fitting concaved portion 41a. The axial end face 11c of the outside member 11 contacts the contact face 41b. The lower face of the upper mold 42 includes a fitting concaved portion 42a and an annular contact face 42b. The inside member 12 fits in the fitting concaved portion 42a. The axial end face 11b of the outside member 11 contacts the contact face 42b.

The lower mold 41 includes a fitting protrusive portion 41c and a protrusion 41d. From the center of the fitting concaved portion 41a, the fitting protrusive portion 41c protrudes upward. From the contact face 41b, the protrusion 41d protrudes upward. The upper mold 42 includes a fitting protrusive portion 42c and a protrusion 42d. From the center of the fitting concaved portion 42a, the fitting protrusive portion 42c protrudes downward. From the contact face 42b, the protrusion 42d protrudes downward. The fitting protrusive portions 41c, 42c are inserted to the internal peripheral side of the inside member 12. The fitting protrusive portions 41c, 42c are regions for positioning the inside member 12 relative to the lower mold 41 and upper mold 42.

Protrusions 41d, 42d are minor regions protruding from part of the contact faces 41b, 42b. Around the entire circumference of the annular contact face 42b (cylindrical outside member 11), the protrusions 41d, 42d are provided continuously. Further, the protrusions 41d, 42d are provided along the internal peripheral edge (internal peripheral face 11a of the outside member 11) of the contact faces 41b, 42b. The protrusions 41d, 42d each have a cross section, which includes the axial center C, in a form of a trapezoid. The protrusions 41d, 42d are disposed adjacent to the internal peripheral edge (internal peripheral face 11a of the outside member 11) of the contact faces 41b, 42b.

Then, a description will be made about the method for manufacturing the torque rod 1 (the first bush 10). First, the outside member 11 free from the groove portion 19 is prepared, and then an adhesive is applied to the internal peripheral face 11a of the outside member 11, to a part (portion for connection with the antivibration base body 13) of the axial end faces 11b, 11c of the outside member 11, and to the external peripheral face 12a of the inside member 12 (preparing process). Then, a holding process is carried out for allowing the metallic mold 40 to hold the outside member 11 and the inside member 12.

In the holding process, first, with the lower mold 41 apart from the upper mold 42, i.e., in an opening state, the outside member 11 and the inside member 12 are each set to a predetermined position of the lower mold 41. At this time, inserting the fitting protrusive portion 41c of the lower mold 41 to the internal peripheral side of the inside member 12 positions the inside member 12 relative to the lower mold 41.

The external peripheral face 11d of the outside member 11 is set to a configuration same as that of the side face of the lower mold 41. Thus, positioning of the outside member 11 relative to the lower mold 41 is accomplished. Further, the protrusion 41d protrudes from the contact face 41b which opposes the axial end face 11c of the outside member 11. Thus, putting the outside member 11 on the tip end of the protrusion 41d is accomplished.

The outside member 11 and the inside member 12 are set on the lower mold 41. Then, as shown in Fig. 5, the lower mold 41 is caused to be covered with the upper mold 42 of the metallic mold 40, to thereby put the lower mold 41 and the upper mold 42 in a closed state. The closing of the mold allows the contact face 41b of the lower mold 41 to contact the axial end face 11c of the outside member 11, and allows the contact face 42b of the upper mold 42 to contact the axial end face 11b of the outside member 11.

The lower mold 41 and the upper mold 42 each include an iron and steel material. The outside member 11 includes an aluminum alloy. Thus, the rigidity of each of the lower mold 41 and the upper mold 42 is higher than the rigidity of the outside member 11. Due to this, the lower mold 41 and the upper mold 42 which are put in the closed state causes the protrusions 41d, 42d to bite into the outside member 11. Then, the groove portion 19 as an impression is formed at the axial end faces 11b, 11c of the outside member 11.

Further, the outside member 11 preliminarily provided with the groove portion 19 may fit with the protrusion 41d of the lower mold 41 and with the protrusion 42d of the upper mold 42. In this case, the fitting has to be made by accurately positioning the groove portion 19 with the protrusions 41d, 42d, resulting in reduction of operational efficiency. Further, for fitting the protrusions 41d, 42d with the groove portion 19, it is necessary to accurately set the dimensional tolerance of the groove portion 19 relative to the protrusions 41d, 42d. Due to this, the outside member 11 failing to be fitted is left as a defective article.

Contrary to this, this embodiment sets the rigidity of the lower mold 41 and upper mold 42 higher than the rigidity of the outside member 11. Thus, allowing the protrusions 41d, 42d to bite into the outside member 11 free from the groove portion 19 forms the groove portion 19 in the outside member 11. As a result thereof, this embodiment can improve the operational efficiency and can reduce the defective rate of the outside member 11.

Putting the lower mold 41 and the upper mold 42 in a closed state, the holding process allows the metallic mold 40 to hold the outside member 11 and the inside member 12. After the holding process, a vulcanizing process for molding the antivibration base body 13 in a vulcanized matter is carried out. In the vulcanizing process, a certain amount of molding material (rubber-like elastic body) is injected into a cavity 44. Herein, the cavity 44 is formed in a manner to be surrounded by the internal peripheral face 11a of the outside member 11, by the external peripheral face 12a of the inside member 12 and by the lower mold 41 and the upper mold 42. This molding material is injected from an injecting hole (not shown) provided in the upper mold 42. Further, according to the injecting of the molding material, an air in the cavity 44 is exhausted outward from an escape hole (not shown) provided in the upper mold 42.

The molding material is filled in the cavity 44. Thereafter, the molding material is held for a certain time in a state of being pressurized and heated. This allows the molding material to cause a vulcanizing reaction, to thereby mold the antivibration base body 13 in a vulcanized manner. Simultaneously, in a vulcanized manner, the antivibration base body 13 is adhered to the internal peripheral face 11a of the outside member 11 and to the external peripheral face 12a of the inside member 12. After the vulcanizing process for molding the antivibration base body 13 in a vulcanized manner, the lower mold 41 and the upper mold 42 are put in the open state. Then, a molded article is taken out from the lower mold 41 and the upper mold 42, to thereby obtain the first bush 10 (the torque rod 1).

With the torque rod 1 as described above, the vulcanizing process holds the molding material (rubber-like elastic body) in the pressurized and heated state for a certain period. There is such a concern that the pressure at the time of the pressurizing or the thermal expansion of the molding material may deform the outside member 11 outward in the radial direction, thus breaking a part of the outside member 11. In particular, the outside member 11 of the first bush 10 is integrated with the connecting member 30. Due to this, there is a difference of rigidity especially between the portion in which the connecting member 30 is integrated and the integrated portion's both sides in the circumferential direction. Thus, the deformation of the region with a high rigidity cannot follow the deformation of the region with a low rigidity. Thus, the rigidity difference leads to a concern that a part of the outside member 11 may be easily deformable or breakable.

According to this embodiment, the protrusions 41d, 42d protrude on the contact faces 41b, 42b of the lower mold 41 and upper mold 42 around the entire circumference. Due to this, the holding process allows the protrusions 41d, 42d to bite into the axial end faces 11b, 11c of the outside member 11 (the protrusions 41d, 42d fit with the groove portions 19 of the outside member 11). Thus, the protrusions 41d, 42d work to make it unlikely to deform the outside member 11 outward in the radial direction. As a result thereof, the deformation or breakage, of the outside member 11, attributable to the pressure at the time of the vulcanized molding can be suppressed.

The protrusions 41d, 42d are provided continuously around the entire circumference of the axial end faces 11b, 11c of the outside member 11 and around the entire circumference of the contact faces 41b, 42b. This can make it unlikely to deform the outside member 11 outward in the radial direction around the entire circumference. As a result thereof, the deformation or breakage, of the outside member 11, attributable to the pressure at the time of the vulcanized molding can be more suppressed.

Herein, in the outside member 11, the region between the internal peripheral face 11a and the protrusions 41d, 42d (groove portions 19) may be deformed by the pressure at the time of the vulcanized molding. When this deformable region has a large radial dimension, the protrusions 41d, 42d fails to sufficiently regulate the outward deformation, of the outside member 11, in the radial direction by the pressure at the time of the vulcanized molding, thus causing a concern of deformation or breakage of the outside member 11.

According to this embodiment, the protrusions 41d, 42d are disposed adjacent to the internal peripheral face 11a of the outside member 11. This disposing can lessen the deformable portion, of the outside member 11, which is the region between the internal peripheral face 11a and the protrusions 41d, 42d (groove portions 19). As a result thereof, deforming the outside member 11 by the pressure at the time of the vulcanized molding can be made more unlikely, thus making it possible to more suppress the deformation or breakage of the outside member 11.

Further, the protrusions 41d, 42d are provided along the internal peripheral face 11a of the outside member 11. Around the entire circumference, this providing can even the radial dimension of the deformable portion, of the outside member 11, which is the region between the internal peripheral face 11a and the protrusions 41d, 42d (groove portions 19). Herein, the portion, of the outside member 11, deformable by the pressure at the time of the vulcanized molding defines a deformation amount. As a result of the radial dimension evened as above, the deformation amount can become close to being even around the entire circumference. This can prevent the portion, of the outside member 11, in the circumferential direction from becoming easily deformable or breakable.

The protrusions 41d, 42d define a height H from the contact faces 41b, 42b. Preferably, the height H is set in a range of more than or equal to 0.2 mm and less than or equal to 0.3 mm. When the height H of the protrusions 41d, 42d is less than 0.2 mm, the outward deformation, of the outside member 11, in the radial direction cannot be sufficiently regulated by the protrusions 41d, 42d. This leads to a concern that the pressure at the time of the vulcanized molding may deform or break the outside member 11.

Further, when the height H of the protrusions 41d, 42d is more than 0.3 mm, the holding process may have a certain event. That is, until the axial end faces 11b, 11c contact the contact faces 41b, 42b, the holding process, as the case may be, fails to have the protrusions 41d, 42d bite into the axial end faces 11b, 11c. In this case, the vulcanizing process fills the molding material (rubber-like elastic body) even between the axial end faces 11b, 11c and the contact faces 41b, 42b. The molding material between the axial end faces 11b, 11c and the contact faces 41b, 42b is expanded by heat at the time of the vulcanized molding. This expansion leads to a concern that the contact faces 41b, 42b may be spaced apart from the axial end faces 11b, 11c and the protrusions 41d, 42d come off from the groove portions 19. With the protrusions 41d, 42d coming off from the groove portions 19, the protrusions 41d, 42d fail to regulate the outward deformation, of the outside member 11, in the radial direction. This failure leads to a concern that the pressure at the time of the vulcanized molding may deform or break the outside member 11.

Contrary to this, setting the height H of the protrusions 41d, 42d in a range of more than or equal to 0.2 mm and less than or equal to 0.3 mm allows the protrusions 41d, 42d to sufficiently regulate the outward deformation, of the outside member 11, in the radial direction. Further, this setting can make it unlikely to fill the molding material (rubber-like elastic body) between the axial end faces 11b, 11c and the contact faces 41b, 42b. As a result thereof, the deformation or breakage, of the outside member 11, attributable to the pressure at the time of the vulcanized molding can be more suppressed.

Further, when the protrusions 41d, 42d are fitted with the groove portions 19 which were preliminarily provided before the holding process, it is unnecessary to set the height H of the protrusions 41d, 42d to less than or equal to 0.3 mm. In this case, matching the height H of the protrusions 41d, 42d with the depth, of the groove portion 19, from the axial end faces 11b, 11c allows the holding process to have the axial end faces 11b, 11c contact the contact faces 41b, 42b.

The outside member 11 includes the first thin portion 16 and the second thin portion 18. In terms of the radial dimension from the internal peripheral face 11a, each of the first thin portion 16 and the second thin portion 18 is smaller than the region adjacent thereto in the circumferential direction. Thus, compared with a case in which the radial dimension of the outside member 11 is even, the outside member 11 can be reduced in weight. However, the rigidity of each of the first thin portion 16 and the second thin portion 18 is lower than the rigidity of the region adjacent thereto in the circumferential direction. The difference of rigidity leads to a concern that a part of the outside member 11 may be deformed or broken.

According to this embodiment, however, the protrusions 41d, 42d can suppress the outside member 11 from being deformed or broken at the time of the vulcanized molding, as stated above. While using the first thin portion 16 and the second thin portion 18 for reducing the outside member 11 in weight, this embodiment can suppress the outside member 11 from being deformed or broken at the time of the vulcanized molding.

Further, the outside member 11 has such a configuration that the first thick portion 14 and the second thick portion 15 are disposed in the position where the elastic leg portions 13a, 13b, 13c and the stopper portion 13d are connected. Further, the thinning groove 17 is disposed in a manner to avoid the connected position. That is, avoiding the position for connecting the elastic leg portions 13a, 13b, 13c and the position for connecting the stopper portion 13d, the first thin portion 16 and the second thin portion 18 are disposed. This disposing can reduce the outside member 11 in weight. Meanwhile, this disposing can secure the rigidity of the region to which the load from the elastic leg portions 13a, 13b, 13c and the load from the stopper portion 13d are directly applied to the outside member 11 at the time of the vulcanized molding. As a result thereof, the outside member 11 is reduced in weight while the deformation or breakage, of the outside member 11, at the time of the vulcanized molding can be more suppressed.

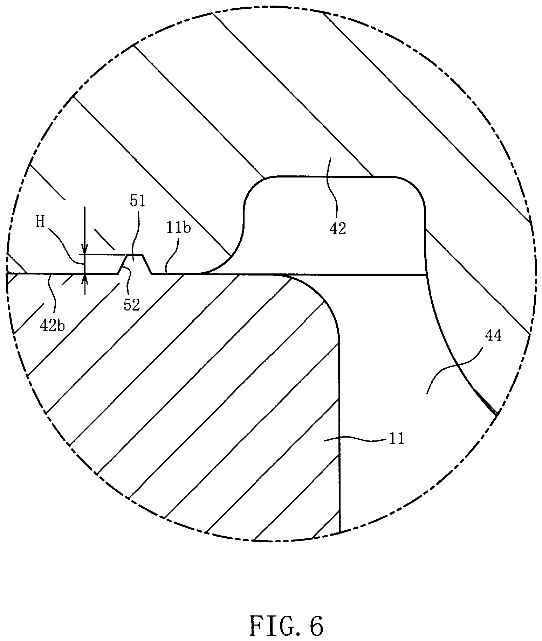

Then, referring to Fig. 6, a description will be made about a second embodiment. According to the first embodiment, the description has been made about the case in which the protrusions 41d, 42d protrude from the contact faces 41b, 42b of the metallic mold 40. Contrary to this, according to the second embodiment, a description will be made about a case in which protrusions 51 protrude from the axial end faces 11b, 11c of the outside member 11. Hereinafter, portions same as those according to the first embodiment will be denoted by the same reference numerals and any description about such portions will be omitted. Fig. 6 is a drawing for describing about a state after closing of the metallic mold 40 for manufacturing the torque rod, according to the second embodiment.

As shown in Fig. 6 the outside member 11 includes the protrusion 51 (level difference) protruding from the axial end face 11b. The contact face 42b of the upper mold 42 includes a groove portion 52 with which the protrusion 51 fits. Further, although not shown, the protrusion 51 also protrudes from the axial end face 11c of the outside member 11, and the protrusion 51 fits with the groove portion 52 provided in the contact face 42b of the lower mold 41. The protrusion 51 and the groove portion 52 are provided continuously around the entire circumference of the outside member 11, and provided along the internal peripheral face 11a of the outside member 11.

The holding process allows the protrusion 51 of the outside member 11 to fit with the groove portion 52 of the metallic mold 40, thus making it unlikely to deform the outside member 11 outward in the radial direction. As a result thereof, similarly to the first embodiment, the outside member 11's deformation or breakage attributable to the pressure at the time of the vulcanized molding can be suppressed.

Further, the outside member 11 is lower in rigidity than the metallic mold 40. Thus, with the groove portion 52 preliminarily provided in the metallic mold 40, the holding process allows the protrusion 51 of the outside member 11 to fit in the groove portion 52. Herein, the first embodiment allows the protrusions 41d, 42d to bite into the axial end faces 11b, 11c of the outside member 11. Thus, a strong force is needed for sandwiching the outside member 11 with the lower mold 41 and the upper mold 42. Contrary to this, the second embodiment allows the protrusion 51 of the outside member 11 to fit in the groove portion 52 preliminarily provided in the metallic mold 40. Thus, the force for sandwiching the outside member 11 with the lower mold 41 and the upper mold 42 can be weakened.

As stated above, the present invention has been described based on the embodiments. However, the present invention is not limited to each of the above embodiments. It is easily conceivable that various improvements or deviations are allowed within the scope of the invention, as defined in the appended claims. For example, the configuration of each of the outside member 11, inside member 12, antivibration base body 13, connecting member 30, second bush 20, protrusions 41d, 42d, 51, groove portions 19, 52, etc. is one example. As a matter of course, various configurations may be adopted. Other examples of configurations of the outside member 11 and the inside member 12 include a cylindrical outside member, and a columnar or cylindrical (axial) inside member.

According to the first embodiment, the description has been made about the case in which the connecting member 30 connects the first bush 10 with the second bush 20 such that the axial center of the second bush 20 becomes vertical to the axial center C of the first bush 10. The present invention is, however, not necessarily limited to this. As a matter of course, disposing the axial center C of the first bush 10 parallel to the axial center of the second bush 20 is allowed. Further, not limited to the case in which the connecting member 30 is fixed to the inside member 22 of the second bush 20, the connecting member may be fixed to the outside member 21 of the second bush 20. An example of fixing the connecting member to the outside member 21 includes a method for providing a cylindrical mounting portion at the connecting member and then press-fitting the outside member 21 to the mounting portion. Another example of fixing the connecting member to the outside member 21 includes a method for forming the outside member 21 integral with the connecting member.

According to each of the above embodiments, the description has been made about the case in which the outside member 11 and the inside member 12 are each made of an aluminum alloy, and the outside member 21, the inside member 22 and the metallic mold 40 are each made of an iron and steel material. The present invention is, however, not necessarily limited to this. The raw material of each of the outside member 11, the inside member 12, the outside member 21, the inside member 22 and the metallic mold 40 may be properly changed. Examples of such raw materials include any metal other than aluminum alloy and iron and steel, and also include synthetic resin. Further, for suppressing the metallic mold 40 from being deformed or scratched by the outside member 11 and inside member 12, the rigidity of the raw material of the metallic mold 40 is preferably higher than the rigidity of the raw material of each of the outside member 11 and the inside member 12.

According to each of the above embodiments, the description has been made about the case in which the protrusions 41d, 42d, 51 and the groove portions 19, 52 are provided continuously around the entire circumference of the contact faces 41b, 42b and the axial end faces 11b, 11c. The present invention is, however, not necessarily limited to this.

According to the second embodiment, the description has been made about the case in which the protrusion 51 of the outside member 11 fits in the groove portion 52 of the metallic mold 40. The present invention is, however, not necessarily limited to this. The groove portion 52 of the metallic mold 40 may be omitted. In this case, the rigidity of the outside member 11 is lower than the rigidity of the metallic mold 40. Thus, impressing the protrusion 51 to the metallic mold 40 in the holding process will cause an elastic deformation to at least the protrusion 51 and the outside member 11 around the protrusion 51. Then, a reactive force of the elastic deformation will strongly impress the protrusion 51 to the metallic mold 40. As a result thereof, at the time of the vulcanized molding, this impressing can make it unlikely to deform, relative to the metallic mold 40, the outside member 11 outward in the radial direction. Thus, it becomes possible to suppress the outside member from being deformed or broken at the time of the vulcanized molding.

According to the first embodiment, the description has been made about the case in which the second bush 20 as the second antivibration device is connected with the connecting member 30 integrated with the outside member 11 of the first bush 10. The present invention is, however, not necessarily limited to this. For example, replacing the second bush 20, a liquid-sealed antivibration device as the second antivibration device may be connected to the connecting member 30.

### [Reference Signs List]

- 1: Torque rod
- 10: First bush (First antivibration device)
- 11: Outside member
- 11a: Internal peripheral face
- 11b, 11c: Axial end face
- 12: Inside member
- 12a: External peripheral face
- 13: Antivibration base body
- 13a, 13b, 13c: Elastic leg portion
- 13d: Stopper portion
- 14: First thick portion
- 15: Second thick portion
- 16: First thin portion (Thin portion)
- 18: Second thin portion (Thin portion)
- 19: Groove portion (Level difference)
- 20: Second bush (Second antivibration device)
- 30: Connecting member
- 31: Through hole (Mounting portion)
- 40: Metallic mold
- 41b, 42b: Contact face
- 41d, 42d: Protrusion
- 44: Cavity
- 51: Protrusion (Level difference)
- 52: Groove portion
- H: Height

## Claims

1. A torque rod (1) comprising:
a first antivibration device (10) including:
a cylindrical outside member (11) having an axial end face (11b, 11c),
an axial inside member (12) disposed on an internal peripheral side of the outside member (11), and
an antivibration base body (13) including a rubber-like elastic body adhered, in a vulcanized manner, to an external peripheral face (12a) of the inside member (12) and to an internal peripheral face (11a) of the outside member (11); and
a connecting member (30) connected to a second antivibration device (20) connecting two members by a rubber-like elastic body, the connecting member (30) being an article integrated with the outside member (11), and **characterised in that**
the outside member (11) includes a level difference (19, 51) which is provided at the axial end face (11b, 11c) around an entire circumference and which has a radial outside axially concaved relative to a radial inside, and **in that** the level difference (19) is a groove portion axially concaved from the axial end face (11b, 11c).

2. The torque rod (1) according to claim 1, wherein
the outside member (11) has a thin portion (16, 18), and
in terms of a radial dimension from the internal peripheral face (11a), the thin portion (16, 18) is smaller than a region adjacent to the thin portion (16, 18) in a circumferential direction.

3. The torque rod (1) according to claim 2, wherein
the antivibration base body (13) includes an elastic leg portion (13a, 13b, 13c) for radially connecting the inside member (12) with the outside member (11),
the outside member (11) includes a first thick portion (14) to which the elastic leg portion (13a, 13b, 13c) is adhered in a vulcanized manner, and
a radial dimension of the first thick portion (14) is set larger than a radial dimension of the thin portion (16, 18) .

4. The torque rod (1) according to claim 2 or 3, wherein
the antivibration base body (13) includes a stopper portion (13d) provided, toward the inside member (12), at the internal peripheral face (11a) of the outside member (11) ,
the outside member (11) includes a second thick portion (15) to which the stopper portion (13d) is adhered in a vulcanized manner, and
a radial dimension of the second thick portion (15) is set larger than a radial dimension of the thin portion (16,18).

5. A method for manufacturing a torque rod (1) which includes:
a first antivibration device (10) connecting, by an antivibration base body (13) including a rubber-like elastic body, an internal peripheral face (11a) of a cylindrical outside member (11) with an external peripheral face (12a) of an axial inside member (12) disposed on an internal peripheral side of the outside member (11), and
a connecting member (30) connected to a second antivibration device (20) connecting two members by a rubber-like elastic body, the connecting member (30) being an article integrated with the outside member (11),
the method for manufacturing the torque rod (1), comprising:
a holding process for:
fixing the inside member (12) in a metallic mold (40), and
sandwiching axial end faces (11b, 11c) of the outside member (11) respectively with contact faces (41b, 42b) of the metallic mold (40), to thereby fix the outside member (11) in the metallic mold (40); and
a vulcanizing process for making a vulcanized molding by injecting a rubber-like elastic body into a cavity (44) of the metallic mold (40) to which the inside member (12) and the outside member (11) are fixed in the holding process, to thereby form the antivibration base body (13) connecting the external peripheral face (12a) of the inside member (12) with the internal peripheral face (11a) of the outside member (11),
and **characterised in that** one of an axial end face (11b, 11c) of the axial end faces (11b, 11c) and a contact face (41b, 42b) of the contact faces (41b, 42b) has a protrusion (41d, 42d, 51) which protrudes toward another of the axial end face (11b, 11c) and the contact face (41b, 42b) and which is formed around an entire circumference, and **in that**
the other of the axial end face(11b, 11c) and the contact face (41b, 42b) includes a groove portion (19, 52) in which the protrusion (41d, 42d, 51) fits.

6. The method for manufacturing the torque rod (1) according to claim 5, wherein
the metallic mold (40) is so set as to have a rigidity higher than a rigidity of the outside member (11),
the protrusion (41d, 42d) is provided at the contact face (41b, 42b), and
the groove portion (19) is an impression formed at the axial end face (11b, 11c) by impressing the protrusion (41d,42d) to the axial end face (11b, 11c) in the holding process.

7. The method for manufacturing the torque rod (1) according to claim 6, wherein the protrusion (41d, 42d) has a height (H) set to be less than or equal to 0.3 mm.

8. The method for manufacturing the torque rod (1) according to any one of claims 5 to 7, wherein the protrusion (41d, 42d, 51) has a height (H) set to be more than or equal to 0.2 mm.

## Patentansprüche

1. Drehmomentstange (1), aufweisend:
eine erste Antischwingungseinrichtung (10), die enthält:
ein zylindrisches äußeres Element (11), das eine axiale Endfläche (11b, 11c) hat,
ein axial inneres Element (12), das an einer inneren Umfangsseite des äußeren Elements (11) angeordnet ist, und
einen Antischwingungsgrundkörper (13) der einen gummiartigen elastischen Körper, der in einer vulkanisierten Weise an einer äußeren Umfangsfläche (12a) des inneren Elements (12) und an einer inneren Umfangsfläche (11a) des äußeren Elements (11) haftet, enthält; und
ein Verbindungselement (30), das mit einer zweiten Antischwingungseinrichtung (20), die zwei Elemente durch einen gummiartigen elastischen Körper verbindet, verbunden ist, wobei das Verbindungselement (30) ein Gegenstand ist, der mit dem äußeren Element (11) integriert ist, und
**dadurch gekennzeichnet ist, dass**
das äußere Element (11) einen Höhenunterschied (19, 51) enthält, der an der axialen Endfläche (11b, 11c) um einen vollständigen Umfang herum vorgesehen ist, und der eine relativ zu einer radialen Innenseite axial konkave radiale Außenseite hat, und
dadurch, dass
der Höhenunterschied (19) ein Nutabschnitt ist, der von der axialen Endfläche (11b, 11c) axial konkav ist.

2. Drehmomentstange (1) gemäß Anspruch 1, wobei
das Außenelement (11) einen dünnen Abschnitt (16, 18) hat, und
der dünne Abschnitt (16, 18) hinsichtlich einer radialen Abmessung von der inneren Umfangsfläche (11a) kleiner als ein in einer Umfangsrichtung zu dem dünnen Abschnitt (16, 18) benachbarter Bereich ist.

3. Drehmomentstange (1) gemäß Anspruch 2, wobei
der Antischwingungsgrundkörper (13) einen elastischen Schenkelabschnitt (13a, 13b, 13c) zum radialen Verbinden des inneren Elements (12) mit dem äußeren Element (11) enthält,
das äußere Element (11) einen ersten dicken Abschnitt (14) enthält, an dem der elastische Schenkelabschnitt (13a, 13b, 13c) in einer vulkanisierten Weise haftet, und
eine radiale Abmessung des ersten dicken Abschnitts (14) größer gewählt ist als eine radiale Abmessung des dünnen Abschnitts (16, 18).

4. Drehmomentstange (1) gemäß Anspruch 2 oder 3, wobei
der Antischwingungsgrundkörper (13) einen Anschlagabschnitt (13d) aufweist, der, zu dem inneren Element (12) hin, an der inneren Umfangsfläche (11a) des äußeren Elements (11) vorgesehen ist,
das äußere Element (11) einen zweiten dicken Abschnitt (15) enthält, an dem der Anschlagabschnitt (13d) in einer vulkanisierten Weise haftet, und
eine radiale Abmessung des zweiten dicken Abschnitts (15) größer gewählt ist als eine radiale Abmessung des dünnen Abschnitts (16, 18).

5. Verfahren zum Herstellen einer Drehmomentstange (1), die enthält:
eine erste Antischwingungseinrichtung (10), die durch einen Antischwingungsgrundkörper (13), der einen gummiartigen elastischen Körper enthält, eine innere Umfangsfläche (11a) eines zylindrischen äußeren Elements (11) mit einer äußeren Umfangsfläche (12a) eines an einer inneren Umfangsseite des äußeren Elements (11) angeordneten axial inneren Elements (12) verbindet, und
ein Verbindungselement (30), das mit einer zweiten Antischwingungseinrichtung (20) verbunden ist, die zwei Elemente durch einen gummiartigen elastischen Körper verbindet, wobei das Verbindungselement (30) ein Gegenstand ist, der mit dem äußeren Element (11) integriert ist,
wobei das Verfahren zum Herstellen der Drehmomentstange (1) aufweist:
einen Festhalteprozess zum
Befestigen des inneren Elements (12) in einer metallischen Form (40), und
jeweiligen schichtenweisen Aufeinanderbringen von axialen Endflächen (11b, 11c) des äußeren Elements (11) mit Kontaktflächen (41b, 42b) der metallischen Form (40), um dabei das äußere Element (11) in der metallischen Form zu befestigen; und
einen Vulkanisationsprozess zum Herstellen eines vulkanisierten Formteils durch Einspritzen eines gummiartigen elastischen Körpers in eine Vertiefung (44) der metallischen Form (40), an der das innere Element (2) und das äußere Element (11) in dem Festhalteprozess befestigt werden, um dabei den Antischwingungsgrundkörper (13) zu bilden, der die äußere Umfangsfläche (12a) des inneren Elements (12) mit der inneren Umfangsfläche (11a) des äußeren Elements (11) verbindet,
und **dadurch gekennzeichnet, dass**
eine von einer axialen Endfläche (11b, 11c) der axialen Endflächen (11b, 11c) und eine Kontaktfläche (41b, 42b) der Kontaktflächen (41b, 42b) einen Vorsprung (41d, 42d, 51) hat, der zu einer anderen der axialen Endfläche (11b, 11c) und der Kontaktfläche (41b, 42b) hin vorsteht, und der um einen vollständigen Umfang herum gebildet ist, und dadurch, dass
die andere von der axialen Endfläche (11b, 11c) und der Kontaktfläche (41b, 42b) einen Nutabschnitt (19, 52) enthält, in den der Vorsprung (41d, 42d, 51) passt.

6. Verfahren zum Herstellen der Drehmomentstange (1) gemäß Anspruch 5 wobei
die metallische Form (40) so gewählt ist, dass sie eine Steifigkeit hat, die höher als eine Steifigkeit des äußeren Elements (11) ist,
der Vorsprung (41d, 42d) an der Kontaktfläche (41b, 42b) vorgesehen ist, und
der Nutabschnitt (19) eine Eindrückung ist, die in dem Festhalteprozess durch Eindrücken des Vorsprungs (41d, 42d) in die axiale Endfläche (11b, 11c) an der axialen Endfläche (11b, 11c) gebildet wird.

7. Verfahren zum Herstellen der Drehmomentstange (1) gemäß Anspruch 6, wobei der Vorsprung (41d, 42d) eine Höhe (H) hat, die gewählt ist, geringer als oder gleich 0,3 mm zu sein.

8. Verfahren zum Herstellen der Drehmomentstange (1) gemäß einem der Ansprüche 5 bis 7, wobei der Vorsprung (41d, 42d, 51) eine Höhe (H) hat, die gewählt ist, mehr als oder gleich 0,2 mm zu sein.

## Revendications

1. Barre de torsion (1) comprenant :
un premier dispositif antivibration (10) incluant :
un organe extérieur cylindrique (11) ayant une face d'extrémité axiale (11b, 11c),
un organe intérieur axial (12) disposé sur un côté périphérique interne de l'organe extérieur (11), et
un corps de base antivibration (13) incluant un corps élastique caoutchouteux collé, d'une manière vulcanisée, à une face périphérique externe (12a) de l'organe intérieur (12) et à une face périphérique interne (11a) de l'organe extérieur (11) ; et
un organe de raccordement (30) raccordé à un second dispositif antivibration (20) raccordant deux organes par un corps élastique caoutchouteux, l'organe de raccordement (30) étant un article intégré à l'organe extérieur (11),
et **caractérisée en ce que**
l'organe extérieur (11) inclut une différence de niveau (19, 51) qui est prévue à la face d'extrémité axiale (11b, 11c) autour d'une circonférence complète et qui a un extérieur radial axialement concave par rapport à un intérieur radial, et
**en ce que** la différence de niveau (19) est une portion de rainure axialement concave par rapport à la face d'extrémité axiale (11b, 11c).

2. Barre de torsion (1) selon la revendication 1, dans laquelle
l'organe extérieur (11) a une portion mince (16, 18), et
en termes d'une dimension radiale à partir de la face périphérique interne (11a), la portion mince (16, 18) est plus petite qu'une région adjacente à la portion mince (16, 18) dans un sens circonférentiel.

3. Barre de torsion (1) selon la revendication 2, dans laquelle
le corps de base antivibration (13) inclut une portion de jambe élastique (13a, 13b, 13c) pour raccorder radialement l'organe intérieur (12) à l'organe extérieur (11),
l'organe extérieur (11) inclut une première portion épaisse (14) à laquelle la portion de jambe élastique (13a, 13b, 13c) est collée d'une manière vulcanisée, et
une dimension radiale de la première portion épaisse (14) est établie plus grande qu'une dimension radiale de la portion mince (16, 18).

4. Barre de torsion (1) selon la revendication 2 ou 3, dans laquelle
le corps de base antivibration (13) inclut une portion de butée (13d) prévue, vers l'organe intérieur (12), à la face périphérique interne (11a) de l'organe extérieur (11),
l'organe extérieur (11) inclut une seconde portion épaisse (15) à laquelle la portion de butée (13d) est collée d'une manière vulcanisée, et
une dimension radiale de la seconde portion épaisse (15) est établie plus grande qu'une dimension radiale de la portion mince (16, 18).

5. Procédé de fabrication d'une barre de torsion (1) qui inclut :
un premier dispositif antivibration (10) raccordant, par un corps de base antivibration (13) incluant un corps élastique caoutchouteux, une face périphérique interne (11a) d'un organe extérieur cylindrique (11) à une face périphérique externe (12a) d'un organe intérieur axial (12) disposé sur un côté périphérique interne de l'organe extérieur (11), et
un organe de raccordement (30) raccordé à un second dispositif antivibration (20) raccordant deux organes par un corps élastique caoutchouteux, l'organe de raccordement (30) étant un article intégré à l'organe extérieur (11),
le procédé de fabrication de la barre de torsion (1) comprenant :
un processus de maintien pour :
la fixation de l'organe intérieur (12) dans un moule métallique (40), et
la prise en sandwich des faces d'extrémité axiale (11b, 11c) de l'organe extérieur (11) respectivement avec des faces de contact (41b, 42b) du moule métallique (40), pour fixer de ce fait l'organe extérieur (11) dans le moule métallique (40) ; et
un processus de vulcanisation pour réaliser un moulage vulcanisé par l'injection d'un corps élastique caoutchouteux dans une cavité (44) du moule métallique (40) auquel l'organe intérieur (12) et l'organe extérieur (11) sont fixés dans le processus de maintien, pour former de ce fait le corps de base antivibration (13) raccordant la face périphérique externe (12a) de l'organe intérieur (12) à la face périphérique interne (lia) de l'organe extérieur (11),
et **caractérisé en ce que**
l'une d'une face d'extrémité axiale (11b, 11c) des faces d'extrémité axiale (11b, 11c) et d'une face de contact (41b, 42b) des faces de contact (41b, 42b) a une saillie (41d, 42d, 51) saillante vers une autre de la face d'extrémité axiale (11b, 11c) et de la face de contact (41b, 42b) et qui est formée autour d'une circonférence complète, et **en ce que**
l'autre de la face d'extrémité axiale (11b, 11c) et de la face de contact (41b, 42b) inclut une portion de rainure (19, 52) dans laquelle la saillie (41d, 42d, 51) s'ajuste.

6. Procédé de fabrication de la barre de torsion (1) selon la revendication 5, dans lequel
le moule métallique (40) est établi pour avoir une rigidité supérieure à une rigidité de l'organe extérieur (11),
la saillie (41d, 42d) est prévue à la face de contact (41b, 42b), et
la portion de rainure (19) est une impression formée à la face d'extrémité axiale (11b, 11c) en imprimant la saillie (41d, 42d) sur la face d'extrémité axiale (11b, 11c) dans le processus de maintien.

7. Procédé de fabrication de la barre de torsion (1) selon la revendication 6, dans lequel la saillie (41d, 42d) a une hauteur (H) établie pour être inférieure ou égale à 0,3 mm.

8. Procédé de fabrication de la barre de torsion (1) selon l'une quelconque des revendications 5 à 7, dans lequel la saillie (41d, 42d, 51) a une hauteur (H) établie pour être supérieure ou égale à 0,2 mm.
